# EUROPEAN PATENT SPECIFICATION

(11) **EP 2 169 887 B1**
(45) Date of publication and mention of the grant of the patent: **12.03.2014**
(21) Application number: 09173808.8
(22) Date of filing: 21.11.2005
(51) Int. Cl.: H04L 12/58

(54) **A method for regulating instant messaging traffic**
Verfahren für das Regulieren des sofortigen Nachrichtenübermittlungverkehrs
Une méthode pour régler le trafic de messages instantanés

(43) Date of publication of application: 31.03.2010
(62) Divisional of application: 05257146.0
(73) Proprietor: BlackBerry Limited, Waterloo, ON N2K 0A7 (CA)
(72) Inventor: Klassen, Gerhard, Waterloo Ontario N2T 1H7 (CA)
(74) Representative: Roberts, Gwilym Vaughan

(56) References cited:
- US-A1- 2005 009 537
- US-A1- 2005 204 004

## Description

### BACKGROUND

### Field

The subj ect matter hereof relates generally to a messaging solution for stationary computers such as PCs and mobile stations such as cell phones, personal data assistants (PDAs), pagers, handheld computers, laptop computers, and other mobile electronic devices (such stationary computers and mobile stations sometimes collectively referred to herein as computing devices), and more particularly, to a method for regulating message traffic in an instant messaging system utilized by computing devices, particularly mobile stations.

### Description of the Related Art

Instant messaging (IM) is a service (typically subscription based) that alerts computer (such as a PC) or mobile station users when another individual, such as a friend or colleague, running a compatible instant messaging application is online (meaning they are logged in to the service and using the instant messaging application) and allows them to send messages to each other in real time, without the store-and-forward delays inherent in an electronic mail solution. With instant messaging, each user creates a list of other users, commonly referred to as a contact list or a buddy list, with whom he or she wishes to communicate. An instant messaging server keeps track of the online status of each of its subscribed users (often referred to as presence information), and when a user is online and someone from a user's contact list is also online, the server alerts that user and enables immediate contact with the other user.

In an instant messaging system, each user has a client application that resides on his or her computer or mobile station. When a user desires to engage in instant messaging, he or she activates the instant messaging client application. The client application then establishes a connection to the instant messaging server, at which time the user must log in by providing identification and password information. Once logged in (meaning the server has verified the identification and password information), the client application sends to the instant messaging server connection information for the computing device being used (including the IP address of the device and the port assigned to the instant messaging client application) and the names of the other users on the user's contact list. The instant messaging server then creates a temporary file for the user that includes the connection and contact list information, and checks whether any of the other users on the user's contact list are currently logged in. If the instant messaging server determines that any of the contacts on the list are currently logged in, it sends a message back to the user's client application that includes the connection information for each contact that is logged in (informing the user that those contacts are online or "present"). The instant messaging server also sends a message to each of the user's contacts that are logged in that includes the user's connection information (thereby informing those contacts that the user is now online or "present"). The user is now able to send "instant messages" to and receive "instant messages" from each logged in contact from their contact list through the instant messaging server. In addition, because all of the logged in user's have each other's connection information, files may be exchanged directly between users, without going through the instant messaging server.

During the time that any user is logged in to the instant messaging service, the user will receive a message from the instant messaging server any time that a contact on the user's contact list that was previously offline logs in. Similarly, whenever a user logs off, the user's instant messaging client application sends a message to the instant messaging server to terminate the session. The instant messaging server then sends a message to each of the logged in contacts on the user's contact list to inform them that the user is no longer online ("not present"). Also, the user, while logged in, will receive a message from the instant messaging server each time a contact that was logged in logs off.

Thus, in an instant messaging system, presence information is constantly being updated and exchanged by way of frequent messages between the server and each of the users. These frequent messages, which increase network traffic, are problematic for wireless networks because the bandwidth of a wireless network is very limited and the cost of data exchange is very high. This problem is further compounded by the reduction of mobile station battery life resulting from the frequent transmission messages to keep track of presence information, contact lists and contact status.

US2005/009537 relates to a wireless presence proxy maintaining presence information.

### BRIEF DESCRIPTION OF THE DRAWINGS

A full understanding can be gained from the following Description of the Preferred Embodiment when read in conjunction with the accompanying drawings in which:
Figure 1 is a block diagram of an embodiment of an instant messaging system;
Figure 2 is a flowchart showing a method of regulating messaging traffic according to a preferred embodiment; and
Figure 3 is a flow chart showing a method of regulating messaging traffic according to an alternative embodiment.

Similar numerals refer to similar parts throughout the specification.

### DESCRIPTION OF THE PREFERRED EMBODIMENT

Provided is a method of regulating message traffic in an instant messaging system having a plurality of users that reduces message traffic and helps mobile stations to conserve battery power. The method includes determining whether an event prompting an instant messaging related message for one of the users has occurred, and determining whether an information send trigger has occurred if it is determined that the event has occurred. The method further includes updating a store of accumulated instant messaging related information, such as presence information for the other users on the user's contact list, for that user based on the event if it is determined that the information send trigger has not occurred, and updating the store of accumulated instant messaging related information for the user based on the event and sending a message based on the updated store of accumulated instant messaging related information to the user if it is determined that the information send trigger has occurred. In one embodiment, the information send trigger will be determined to have occurred when the user is not in an idle state and will be determined to have not occurred when the user is in an idle state. In another embodiment, the information send trigger will be determined to have occurred when a transmission timer has reached an established threshold and will be determined to have not occurred if the transmission timer is below the established threshold. Preferably, the method further includes clearing the store of accumulated instant messaging related information each time the user logs in to the instant messaging system. As a result, instant messaging traffic is reduced because messages are sent to users only when they are not idle. The reduction in traffic is especially advantageous for wireless networks, as they have limited bandwidth.

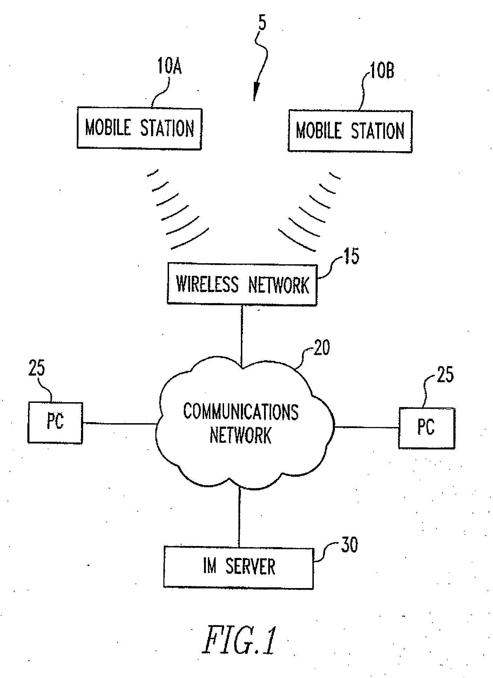

Figure 1 is a block diagram of an instant messaging system 5 described herein. System 5 includes a plurality of mobiles stations 10, such as mobile stations 10A and 10B shown in Figure 1, which may be any type of wireless mobile electronic communications device such as a cell phone, PDA, pager, handheld computer, or laptop computer, to name a few. As is known, each mobile station 10 may be provided with various applications, including, without limitation, one or more communications applications, such as a wireless telephone application, an email application, or a short message service (SMS) application. In addition, each mobile station 10 is provided with an instant messaging client application that enables the user to engage in instant messaging sessions with other similarly equipped users as described above. The term "application" as used herein shall include one or more programs, routines, subroutines, function calls or other type of software or firmware and the like, alone or in combination.

System 5 also includes wireless network 15, which may be any wireless communications network or combination of interconnected networks, including, without limitation, Mobiltex™ DataTAC™, AMPS, TDMA, CDMA, GSM/GPRS, PCS, EDGE, UMTS or CDPD. As is known, wireless network 15 includes a plurality of base stations that perform radio frequency (RF) protocols to support data and voice exchanges with, for example, other mobile stations 10. In turn, wireless network 15 is connected to communications network 20 such as the Internet, thereby enabling communication between mobile stations 10 and other devices that are also connected to communications network 20.

As seen in Figure 1, a plurality of other computing devices, such as stationary PCs 25A and 25B, are also connected to communications network 20. Like mobile stations 10A and 10B, each stationary PC 25 is provided with an instant messaging client application that enables the user to engage in instant messaging sessions with other similarly equipped users as described above.

IM server 30, which may be any type of known instant messaging hardware/software server system, is also connected to communications network 20. Each mobile station 10 and PC 25 is able to communicate electronically with IM server 30 and with one another through communications network 20 in a known manner. Thus, instant messaging system 5 enables any one mobile station 10 or PC 25 to engage in instant messaging with any other mobile station 10 or PC 25 utilizing the service provided by IM server 30.

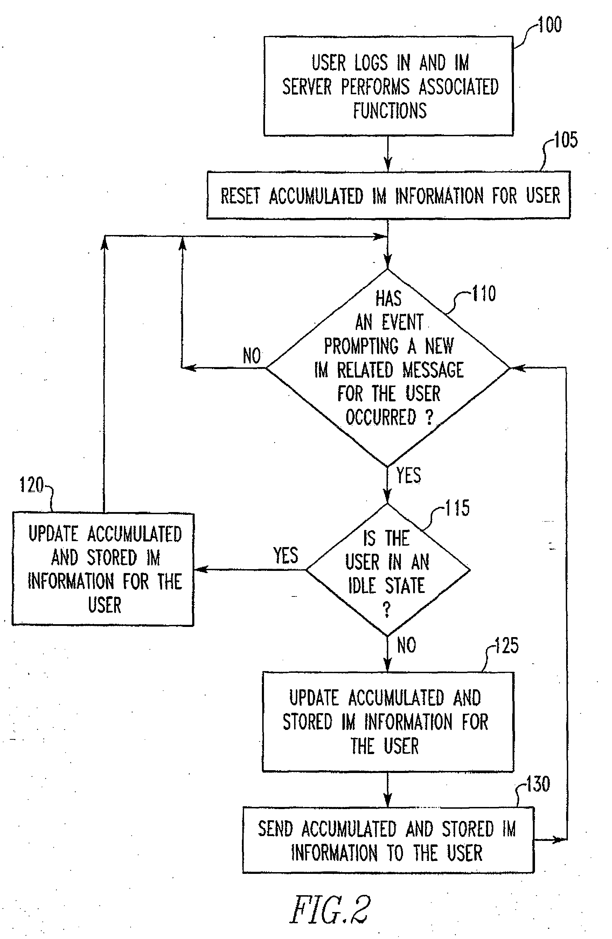

Referring to Figure 2, a flowchart is provided that shows a method of regulating the flow of message traffic in instant messaging system 5 according to a preferred embodiment. This method, as described in greater detail below, reduces wireless traffic resulting from instant messaging and helps to preserve battery power for mobile stations such as mobile stations 10. IM server 30 is provided with and executes one or more routines for implementing the method shown in Figure 2.

The method begins at step 100, where an instant messaging user (preferably a user of a mobile station 10, but also possibly a user of a PC 25 or any other computing device connected to communications network 20) establishes a connection to the IM server 30 and logs in by providing identification and password information. The user's instant messaging client application also sends the user's connection and contact list information to the IM server 30. IM server 30 then performs various log in related functions. Specifically, IM server 30 creates a temporary file for the user that includes the connection and contact list information, and checks whether any of the other users on the user's contact list are currently logged in. If the 1M server 30 determines that any of the contacts on the list are currently logged in, it sends a message back to the user's client application, through communications network 20 and possibly wireless network 15, which includes the connection information for each contact that is logged in. The IM server 30 also sends a message that includes the user's connection information to each of the logged in contacts through communications network 20 and possibly wireless network 15.

Under certain circumstances, described below, IM server 30, according to one aspect, is adapted to accumulate and store, in an associated memory, certain instant messaging related information for the users that are registered with IM server 30 (rather than transmit such information to the users as would be the normal procedure). Such instant messaging related information may include, without limitation, the presence status (online or offline) of the contacts (other users) that are on the user's contact list. As is known, the presence status may include specific messages that describe what the other users are doing (e.g., busy, out to lunch, listening to a particular song , and other manually entered descriptions).

Referring again to Figure 2, at step 105, IM server 30 resets (clears) the store of accumulated instant messaging related information for the user that just logged in, in effect providing a clean slate for the user for the current session. Next, at step 110, the IM server 30 determines whether an event has occurred that would, according to the instant messaging protocol being utilized, normally prompt an IM related message for the user. For example, if a contact on the user's contact list changes his or her presence status (i.e., logs in and is thus online or logs off and is thus offline), a message is normally sent to the user's client application through communications network 20 and possibly wireless network 15 notifying the user of this status change. If the answer at step 110 is no, meaning no such event has occurred, then the method returns to step 110 (to in effect continuously monitor the occurrence of events prompting an IM related message for the user). If, however, the answer at step 110 is yes, then, at step 115, IM server 30 determines whether the user is currently in an idle state, meaning that the user is not actively using the mobile station 10 or PC 25. In particular, the client application provided on each mobile station 10 and PC 25. In particular, the client application provided on each mobile station 10 and PC 25 monitors the length of time during which a user is not actively using the keyboard, keypad or other input device of the mobile station 10 or PC 25, and if that time exceeds a threshold amount, the client application causes a message to be sent to the IM Server 30 indicating that the user is in an idle state. The IM server 30 stores the user's state as being idle until such time that a signal is received from the client application indicating that the user is no longer idle (i.e., has started to actively use the device again). If the answer is yes, meaning that the user is currently idle, then, at step 120, the accumulated and stored TM related information for the user is updated based on the event from step 110 to further include information relating thereto (i.e., the information that normally would be sent to the user). As will be appreciated, the initial update will be to a reset (empty) store of accumulated information. Note that, according to one aspect, the event based IM related information is not, at this point, sent to the user since the user was determined to be idle. Instead, it is accumulated for later transmission to the user as described below. The method then returns to step 110. If, however, the answer at step 115 is no, meaning the user is not idle, then, at step 125, the store of accumulated IM related information for the user is updated based on the event from step 110 to further include information relating thereto, and, at step 130, a message based on same or the entirety of the store of accumulated IM related information (as just updated) is sent to the user's instant messaging client application. For example, during the period in which the user is idle, one of the contacts on the user's contact list may change presence status a number of times (e.g., go from online to offline to online). In such a case, only the latest presence status need be sent to the user when the user is no longer idle. As will be appreciated, this may be implemented in Step 125, wherein the updating step includes replacing existing presence status information for a contact with new status information for the contact when a status change occurs.

Thus, instead of repeatedly sending instant messaging related information, such as presence information, to each user regardless of whether the user is idle, such information is accumulated by IM server 30 if the user is in an idle state, and is not delivered to the user until the user is no longer idle. As such, this greatly reduces IM related network traffic and helps to conserve battery power in the case of mobile stations 10. As will be appreciated, during the time that a user is idle, one of the user's contacts may change presence status several times (i.e., move form online to offline to online again), and there is reason that the user needs to know this while idle. In the prior art, a message would be sent to the user upon each state change, even if the user is idle, which creates unnecessary network traffic. The preferred embodiment herein avoids the creation of unnecessary network traffic by only sending messages when they are meaningful to the user (i.e., when they are not idle).

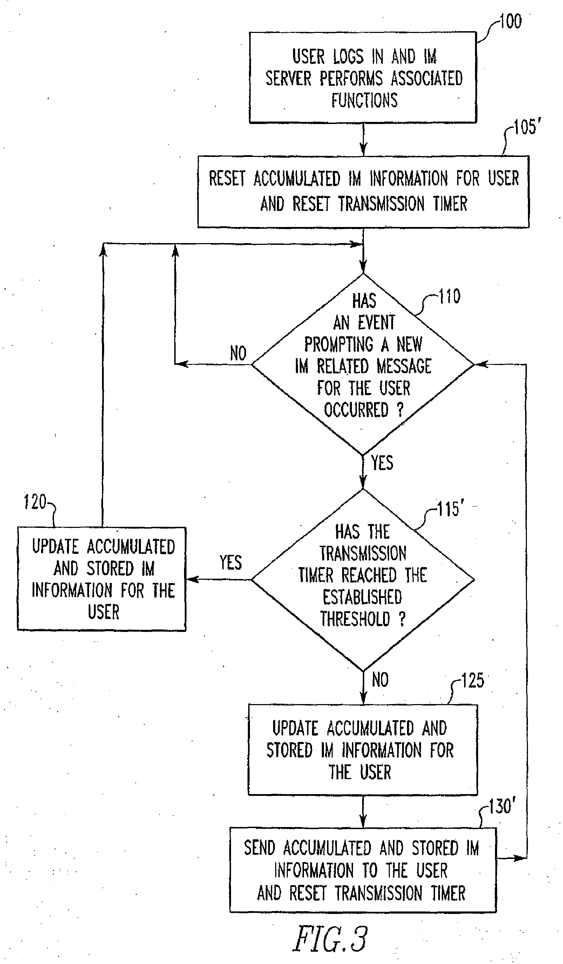

Figure 3 is a flowchart that shows a method of regulating the flow of message traffic in instant messaging system 5 according to an alternative embodiment. The method shown in Figure 3 differs from the method shown in Figure 2 in that, instead of accumulating IM information while the user is idle and then providing accumulated IM information to the user when the user is no longer idle (Figure 2), the method in Figure 3 accumulates and stores IM information for predetermined periods of time and then sends accumulated IM information to the user periodically to cut down on message traffic in the system 5. Thus, Figure 3 differs from Figure 2 in that steps 105', 115' and 130' have replaced steps 105, 115, 130. Specifically, step 105' further includes resetting a transmission timer, step 115' includes determining whether the transmission timer has reached an established threshold value (the desired time for accumulating messages), and step 130' includes resetting the transmission timer each time that IM information is sent to the user.

Figures 2 and 3 thus provide methods that reduce message traffic by accumulating IM information until such time that it is determined that an information send trigger has occurred. In Figure 2, that trigger is the user being in a non-idle state, and in Figure 3, that trigger is the passage of a predetermined amount of time since the last transmission. Other information send triggers are also possible without departing from the scope hereof.

Alternative embodiments of the system 5 shown in Figure 1 may include one or more additional servers to provide additional functionality. For example, an intermediate server may be provided between the wireless network 15 and the IM server 30 to convert the protocol to a protocol suitable for wireless. An intermediate server may also be provided between any client (a mobile station 10 or a PC 25 ) and the IM server 30 to log or audit traffic. It should be understood that the methods shown in Figures 2 and 3 may be implemented in any such intermediate server instead of the IM server 30.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting as to scope, which is to be given the full breadth of the claims appended and any and all equivalents thereof.

There is disclosed a method of regulating message traffic in an instant messaging system having a plurality of users, comprising:
determining whether an event prompting an instant messaging related message for one of said users has occurred;
determining whether an information send trigger has occurred if it is determined that said event has occurred;
updating a store of accumulated instant messaging related information for said one of said users based on said event if it is determined that said information send trigger has not occurred; and
updating said store of accumulated instant messaging related information for said one of said users based on said event and sending a message based on said updated store of accumulated instant messaging related information to said one of said users if it is determined that said information send trigger has occurred.

The method may be wherein said information send trigger will be determined to have occurred when said one of said users is not in an idle state and wherein said information send trigger will be determined to have not occurred when said one of said users is in an idle state.

The method may be wherein said information send trigger will be determined to have occurred when a transmission timer has reached an established threshold and wherein said information send trigger will be determined to have not occurred if said transmission timer is below said established threshold. The method may further comprise resetting said transmission timer when said one of said users logs in said instant messaging system and after the step of sending a message based on said updated store of accumulated instant messaging related information is performed.

The method may further comprise clearing said store of accumulated instant messaging related information when said one of said users logs in to staid instant messaging system.

The method may be wherein said user has a contact list having a plurality of contacts, wherein said event includes a change of presence state for one of said contacts, and wherein said updating steps comprise updating said store of accumulated instant messaging related information to reflect said change or presence state.

## Claims

1. An instant messaging server for an instant messaging system having a plurality of users, said instant messaging server having and structured to execute one or more routines adapted to:
determine (110) whether an event prompting an instant messaging related message for one of said users has occurred;
determine (115) whether a computing device (10, 25) of said one of said users is currently in an idle state, if it is determined that said event has occurred, based on a message received from said computing device indicating whether a client application on said computing device is actively being used;
update (120) a store of accumulated instant messaging related information for said one of said users based on said event without also sending a message based on said updated store of accumulated instant message related information to said one of said users if it is determined that said computing device is currently in an idle state; and
update (125) said store of accumulated instant message related information for said one of said users based on said event and send a message based on said updated store of accumulated instant messaging related information to said one of said users only if it is determined that said computing device is not currently in an idle state.

2. The instant messaging server according to claim 1, wherein said message received from said computing device is based on a length of time an input device of said computing device has not been used.

3. The instant messaging server according to claim 1 or claim 2, the one or more routines are further adapted to clear said store of accumulated instant messaging related information when said one of said user logs in to said instant messaging system.

4. The instant messaging server according to any one of claims 1 to 3, wherein said user has a contact list having a plurality of contacts, wherein said event includes a change of presence state for one of said contacts, and wherein said one or more routines are adapted to update said store of accumulated instant messaging related information to reflect said change of presence state.

5. A computing device (10, 25) for an instant messaging system (5) having a plurality of users, said computing device (10, 25) having and structured to execute one or more routines adapted to:
determine that a client application on said computing device is not actively being used;
send a first message to an instant messaging server for said instant messaging system indicating that said client application on said computing device is not actively being used to have a store of accumulated instant messaging related information updated based on events prompting an instant messaging related message for one of said users has occurred without also receiving a message based on said updated store of accumulated instant message related information;
determine that said client application is actively being used;
send a second message to said instant messaging server indicating that said client application is actively being used; and
receive a message based on said updated store of accumulated instant messaging related information from said instant messaging server.

6. The computing device according to claim 5, wherein at least one of said first and second messages sent to said instant messaging server is based on a length of time an input device of said computing device has not been used.

7. The computing device according to claim 5 or claim 6, wherein said user has a contact list having a plurality of contacts, wherein said event includes a change of presence state for one of said contacts, and wherein said store of accumulated instant messaging related information is updated to reflect said change of presence state.

8. A method performed by a computing device in an instant messaging system having a plurality of users comprising:
determining that a client application on said computing device is not actively being used;
sending a first message to an instant messaging server for said instant messaging system indicating that said client application on said computing device is not actively being used to have a store of accumulated instant messaging related information updated based on events prompting an instant messaging related message for one of said users has occurred without also receiving a message based on said updated store of accumulated instant message related information;
determining that said client application is actively being used;
sending a second message to said instant messaging server indicating that said client application is actively being used; and
receiving a message based on said updated store of accumulated instant messaging related information from said instant messaging server.

9. The method according to claim 8, wherein at least one of said first and second messages sent to said instant messaging server is based on a length of time an input device of said computing device has not been used.

10. The method according to claim 8 or claim 9, wherein said user has a contact list having a plurality of contacts, wherein said event includes a change of presence state for one of said contacts, and wherein said store of accumulated instant messaging related information is updated to reflect said change of presence state.

## Patentansprüche

1. Ein Instant-Messaging bzw. Sofortnachrichten-Server für ein Instant-Messaging-System mit einer Vielzahl von Benutzern, wobei der Instant-Messaging-Server eine oder mehrere Routine(n) aufweist und strukturiert ist, diese auszuführen, die ausgebildet ist/sind zum:
Bestimmen (110), ob ein Ereignis, das eine Instant-Messaging-betreffende Nachricht für einen der Benutzer auslöst, aufgetreten ist;
Bestimmen (115), ob eine Computervorrichtung (10, 25) des einen der Benutzer aktuell in einem inaktiven bzw. Ruhezustand ist, wenn bestimmt wird, dass das Ereignis aufgetreten ist, basierend auf einer Nachricht, die von der Computervorrichtung empfangen wird, die angibt, ob eine Client-Anwendung auf der Computervorrichtung aktiv verwendet wird;
Aktualisieren (120) eines Speichers von akkumulierter, Instant-Messaging-betreffender Information für den einen der Benutzer basierend auf dem Ereignis, ohne auch eines Sendens einer Nachricht basierend auf dem aktualisierten Speicher von akkumulierter, Instant-Messaging-betreffender Information an den einen der Benutzer, wenn bestimmt wird, dass die Computervorrichtung aktuell in einem Ruhezustand ist; und
Aktualisieren (125) des Speichers von akkumulierter, Instant-Messaging-betreffender Information für den einen der Benutzer basierend auf dem Ereignis und Senden einer Nachricht basierend auf dem aktualisierten Speicher von akkumulierter, Instant-Messaging-betreffender Information an den einen der Benutzer nur, wenn bestimmt wird, dass die Computervorrichtung aktuell nicht in einem Ruhezustand ist.

2. Der Instant-Messaging-Server gemäß Anspruch 1, wobei die Nachricht, die von der Computervorrichtung empfangen wird, auf einer Zeitdauer basiert, während der eine Eingabevorrichtung der Computervorrichtung nicht verwendet wurde.

3. Der Instant-Messaging-Server gemäß Anspruch 1 oder Anspruch 2, wobei die eine oder mehreren Routine(n) weiter ausgebildet ist/sind zum Löschen des Speichers von akkumulierter, Instant-Messaging-betreffender Information, wenn sich der eine der Benutzer an dem Instant-Messaging-System anmeldet.

4. Der Instant-Messaging-Server gemäß einem der Ansprüche 1 bis 3, wobei der Benutzer eine Kontaktliste mit einer Vielzahl von Kontakten hat, wobei das Ereignis eine Änderung eines Präsenzstatus für einen der Kontakte umfasst, und wobei die eine oder mehreren Routine(n) ausgebildet ist/sind zum Aktualisieren des Speichers von akkumulierter, Instant-Messaging-betreffender Information, um die Änderung des Präsenzstatus zu reflektieren.

5. Eine Computervorrichtung (10, 25) für ein Instant-Messaging- bzw. Sofortnachrichten-System (5) mit einer Vielzahl von Benutzern, wobei die Computervorrichtung (10, 25) eine oder mehrere Routine(n) aufweist und strukturiert ist, diese auszuführen, die ausgebildet ist/sind zum:
Bestimmen, dass eine Client-Anwendung auf der Computervorrichtung nicht aktiv verwendet wird;
Senden einer ersten Nachricht an einen Instant-Messaging-Server für das Instant-Messaging-System, die angibt, dass die Client-Anwendung auf der Computervorrichtung nicht aktiv verwendet wird, um einen Speicher von akkumulierter, Instant-Messaging-betreffender Information aktualisieren zu lassen basierend darauf, dass Ereignisse, die eine Instant-Messagingbetreffende Nachricht für einen der Benutzer auslösen, aufgetreten sind,
ohne auch eines Empfangens einer Nachricht basierend auf dem aktualisierten Speicher von akkumulierter, Instant-Messaging-betreffender Information;
Bestimmen, dass die Client-Anwendung aktiv verwendet wird;
Senden einer zweiten Nachricht an den Instant-Messaging-Server, die angibt, dass die Client-Anwendung aktiv verwendet wird; und
Empfangen einer Nachricht basierend auf dem aktualisierten Speicher von akkumulierter, Instant-Messaging-betreffender Information von dem Instant-Messaging-Server.

6. Die Computervorrichtung gemäß Anspruch 5, wobei zumindest eine der ersten und zweiten Nachrichten, die an den Instant-Messaging-Server gesendet werden, auf einer Zeitdauer basiert, während der eine Eingabevorrichtung der Computervorrichtung nicht verwendet wurde.

7. Die Computervorrichtung gemäß Anspruch 5 oder Anspruch 6, wobei der Benutzer eine Kontaktliste mit einer Vielzahl von Kontakten hat, wobei das Ereignis eine Änderung eines Präsenzstatus für einen der Kontakte umfasst, und wobei der Speicher von akkumulierter, Instant-Messaging-betreffender Information aktualisiert wird, um die Änderung des Präsenzstatus zu reflektieren.

8. Ein Verfahren, das von einer Computervorrichtung in einem Instant-Messaging-System, das eine Vielzahl von Benutzern hat, durchgeführt wird, das aufweist:
Bestimmen, dass eine Client-Anwendung auf der Computervorrichtung nicht aktiv verwendet wird;
Senden einer ersten Nachricht an einen Instant-Messaging-Server für das Instant-Messaging-System, die angibt, dass die Client-Anwendung auf der Computervorrichtung nicht aktiv verwendet wird, um einen Speicher von akkumulierter, Instant-Messaging-betreffender Information aktualisieren zu lassen basierend darauf, dass Ereignisse, die eine Instant-Messaging-betreffende Nachricht für einen der Benutzer auslösen, aufgetreten sind, ohne auch eines Empfangens einer Nachricht basierend auf dem aktualisierten Speicher von akkumulierter, Instant-Messaging-betreffender Information;
Bestimmen, dass die Client-Anwendung aktiv verwendet wird;
Senden einer zweiten Nachricht an den Instant-Messaging-Server, die angibt, dass die Client-Anwendung aktiv verwendet wird; und
Empfangen einer Nachricht basierend auf dem aktualisierten Speicher von akkumulierter, Instant-Messaging-betreffender Information von dem Instant-Messaging-Server.

9. Das Verfahren gemäß Anspruch 8, wobei zumindest eine der ersten und zweiten Nachrichten, die an den Instant-Messaging-Server gesendet werden, auf einer Zeitdauer basiert, während der eine Eingabevorrichtung der Computervorrichtung nicht verwendet wurde.

10. Das Verfahren gemäß Anspruch 8 oder Anspruch 9, wobei der Benutzer eine Kontaktliste mit einer Vielzahl von Kontakten hat, wobei das Ereignis eine Änderung eines Präsenzstatus für einen der Kontakte umfasst, und wobei der Speicher von akkumulierter, Instant-Messaging-betreffender Information aktualisiert wird, um die Änderung des Präsenzstatus zu reflektieren.

## Revendications

1. Serveur de messagerie instantanée pour un système de messagerie instantanée ayant une pluralité d'utilisateurs, ledit serveur de messagerie instantanée ayant une ou plusieurs routine(s) et étant structuré pour exécuter celle(s)-ci, laquelle/lesquelles routine(s) étant adaptée(s) pour :
déterminer (110) si un événement incitant l'envoi d'un message lié à une messagerie instantanée pour l'un desdits utilisateurs s'est produit ;
déterminer (115) si un dispositif informatique (10, 25) dudit un desdits utilisateurs est actuellement dans un état de repos, s'il est déterminé que ledit événement s'est produit, sur la base d'un message reçu à partir dudit dispositif informatique indiquant si une application client sur ledit dispositif informatique est activement en cours d'utilisation ;
mettre à jour (120) une mémoire d'informations accumulées liées à une messagerie instantanée pour ledit un desdits utilisateurs sur la base dudit événement sans également envoyer un message sur la base de ladite mémoire mise à jour d'informations accumulées liées à un message instantané audit l'un desdits utilisateurs s'il est déterminé que ledit dispositif informatique est actuellement dans un état de repos ; et
mettre à jour (125) ladite mémoire d'informations accumulées liées à un message instantané pour ledit l'un desdits utilisateurs sur la base dudit événement et pour envoyer un message sur la base de ladite mémoire mise à jour d'informations accumulées liées à une messagerie instantanée audit l'un desdits utilisateurs seulement s'il est déterminé que ledit dispositif informatique n'est pas actuellement dans un état de repos.

2. Serveur de messagerie instantanée selon la revendication 1, dans lequel ledit message reçu à partir dudit dispositif informatique est basé sur une durée pendant laquelle un dispositif d'entrée dudit dispositif informatique n'a pas été utilisé.

3. Serveur de messagerie instantanée selon la revendication 1 ou 2, la ou les plusieurs routine(s) est/sont en outre adaptée(s) pour effacer ladite mémoire d'informations accumulées liées à une messagerie instantanée lorsque ledit l'un desdits utilisateurs se connecte audit système de messagerie instantanée.

4. Serveur de messagerie instantanée selon l'une quelconque des revendications 1 à 3, dans lequel ledit utilisateur a une liste de contacts ayant une pluralité de contacts, où ledit événement comporte un changement d'état de présence pour l'un desdits contacts, et où ladite ou lesdites plusieurs routine(s) est/sont adaptée(s) pour mettre à jour ladite mémoire d'informations accumulées liées à une messagerie instantanée afin de refléter ledit changement d'état de présence.

5. Dispositif informatique (10, 25) pour un système de messagerie instantanée (5) ayant une pluralité d'utilisateurs, ledit dispositif informatique (10, 25) ayant une ou plusieurs routine(s) et étant structuré pour exécuter celle(s)-ci, laquelle/lesquelles routine(s) étant adaptée(s) pour :
déterminer qu'une application client sur ledit dispositif informatique n'est pas activement utilisée ;
envoyer un premier message à un serveur de messagerie instantanée pour ledit système de messagerie instantanée indiquant que ladite application client sur ledit dispositif informatique n'est pas activement utilisée pour avoir une mémoire d'informations accumulées liées à une messagerie instantanée mise à jour sur la base de l'occurrence d'événements incitant l'envoi d'un message lié à une messagerie instantanée pour l'un desdits utilisateurs sans également recevoir un message sur la base de ladite mémoire mise à jour d'informations accumulées liées à un message instantané ;
déterminer que ladite application client est activement utilisée ;
envoyer un deuxième message audit serveur de messagerie instantanée indiquant que ladite application client est activement utilisée ; et
recevoir un message sur la base de ladite mémoire mise à jour d'informations accumulées liées à une messagerie instantanée à partir dudit serveur de messagerie instantanée.

6. Dispositif informatique selon la revendication 5, dans lequel au moins l'un desdits premier et deuxième messages envoyés audit serveur de messagerie instantanée est basé sur une durée pendant laquelle un dispositif d'entrée dudit dispositif informatique n'a pas été utilisé.

7. Dispositif informatique selon la revendication 5 ou 6, dans lequel ledit utilisateur a une liste de contacts ayant une pluralité de contacts, où ledit événement comporte un changement d'état de présence pour l'un desdits contacts, et où ladite mémoire d'informations accumulées liées à une messagerie instantanée est mise à jour pour refléter ledit changement d'état de présence.

8. Procédé effectué par un dispositif informatique dans un système de messagerie instantanée ayant une pluralité d'utilisateurs comprenant le fait :
de déterminer qu'une application client sur ledit dispositif informatique n'est pas activement utilisée ;
d'envoyer un premier message à un serveur de messagerie instantanée pour ledit système de messagerie instantanée indiquant que ladite application client sur ledit dispositif informatique n'est pas activement utilisée pour avoir une mémoire d'informations accumulées liées à une messagerie instantanée mise à jour sur la base de l'occurrence d'événements incitant l'envoi d'un message lié à une messagerie instantanée pour l'un desdits utilisateurs sans également recevoir un message sur la base de ladite mémoire mise à jour d'informations accumulées liées à un message instantané ;
de déterminer que ladite application client est activement utilisée ;
d'envoyer un deuxième message audit serveur de messagerie instantanée indiquant que ladite application client est activement utilisée ; et
de recevoir un message sur la base de ladite mémoire mise à jour d'informations accumulées liées à une messagerie instantanée à partir dudit serveur de messagerie instantanée.

9. Procédé selon la revendication 8, dans lequel au moins l'un desdits premier et deuxième messages envoyés audit serveur de messagerie instantanée est basé sur une durée pendant laquelle un dispositif d'entrée dudit dispositif informatique n'a pas été utilisé.

10. Procédé selon la revendication 8 ou 9, dans lequel ledit utilisateur a une liste de contacts ayant une pluralité de contacts, où ledit événement comporte un changement d'état de présence pour l'un desdits contacts, et où ladite mémoire d'informations accumulées liées à une messagerie instantanée est mise à jour pour refléter ledit changement d'état de présence.
